# EUROPÄISCHE PATENTSCHRIFT

(11) **EP 1 362 767 B1**
(45) Veröffentlichungstag und Bekanntmachung des Hinweises auf die Patenterteilung: **14.06.2006**
(21) Anmeldenummer: 03005868.9
(22) Anmeldetag: 15.03.2003
(51) Int. Cl.: B62D 21/11

(54) **Fahrschemel für eine Vorderachse eines Kraftfahrzeugs**
Motor vehicle front suspension sub-frame
Faux chassis de suspension avant de véhicule automobile

(30) Priorität: 14.05.2002 DE 10221299
(43) Veröffentlichungstag der Anmeldung: 19.11.2003
(73) Patentinhaber: Dr.Ing. h.c.F. Porsche Aktiengesellschaft, 70435 Stuttgart (DE)
(72) Erfinder: Frasch, Wilhelm, 72644 Oberboihingen (DE); Klamser, Herbert, 71120 Grafenau (DE); Rau, Sven, 70569 Stuttgart-Vaihingen (DE)

(56) Entgegenhaltungen:
- EP-A- 0 958 992
- DE-A- 4 313 785
- FR-A- 2 810 275

## Beschreibung

Die Erfindung bezieht sich auf einen Fahrschemel für eine Vorderachse eines Kraftfahrzeugs nach dem Oberbegriff des Anspruchs 1.

Aus der DE 199 20 051 A1 ist ein Fahrschemel für eine Vorderachse eines Kraftfahrzeugs bekannt, der in Fahrzeuglängsrichtung verlaufende Seitenträger aufweist, die mit zwei Querträgern ein Rahmengestell bilden, das über elastische Lager mit dem Fahrzeugaufbau verbindbar ist. Am vorne liegenden Querträger ist über Schellen ein Stabilisator befestigt.

Aus der FR 2 810 275 ist ein Fahrschemmel gemäß dem Oberbegriff des Anspruchs 1 bekannt.

Aufgabe der Erfindung ist es, einen Fahrschemel für ein Kraftfahrzeug mit einer Befestigung für einen Stabilisator zu schaffen, die auch zum Schutz des Fahrschemels bei einem Crash ausgebildet ist.

Diese Aufgabe wird erfindungsgemäß durch die Merkmale des Anspruchs 1 gelöst. Weitere vorteilhafte Merkmale beinhalten die Unteränsprüche.

Die mit der Erfindung hauptsächlich erzielten Vorteile bestehen darin, dass Halteelemente für den Stabilisator verwendet werden, welche gleichzeitig bei einem Crash bzw. einen Stoß auf den Fahrschemel diesen zumindest soweit schützt, dass eine wesentliche Verlagerung des Fahrschemels in seinen Lagern vermieden wird. Auch wird eine Beschädigung des Fahrschemels hierdurch unterdrückt. Hierzu wird das Halteelement als sog. Schelle für den Stabilisator verwendet, die diesen haltend übergreift und am Träger oder an einem Trägerfortsatz über Befestigungsschrauben festgesetzt wird und andererseits weist das Halteelement ein über den Träger bzw. den Trägerfortsatz des Fahrschemels herausragendes Stoßteil auf, das mit dem Träger bzw. einem Trägerteil eine frontseitige Einhakverbindung und eine hinterseitige Abstützung zum Träger ausbildet. Diese Einhakverbindung besteht im wesentlichen aus einer schlitzartigen Ausnehmung im Halteelement, in welche eine Vorderkante des Trägers hineinragt. Durch eine solche Ausbildung des Halteelements und seiner Anordnung zum Träger wird in vorteilhafter Weise erreicht, dass bei einem Stoß auf den Fahrschemel entgegen der Fahrtrichtung, dieser zuerst von dem Halteelement bzw. von den beiden Halteelementen aufgenommen wird. Diese haken sich an der Vorderkante des Trägers fest und können sich energieaufnehmend verformen, wobei über die hintere Abstützung eine wesentliche Verlagerung der Halteelemente entgegen gewirkt wird. Im Fahrzeug sind die Halteelemente durch eine Bugschürze oder dgl. abgedeckt.

Die energieaufnehmende Verformung wird auch dadurch verbessert, in dem vor der Einhakverbindung - in Fahrtrichtung gesehen - ein vor dem Träger liegender Bereich des Halteelements mit einer Stützkante vorgesehen ist.

Die Einhakverbindung verhindert auch bei einem möglichen Hochdrücken des Halteelementes ein Abreißen der Befestigungsschrauben.

Insbesondere ist am freien hinteren Ende des Halteelements eine Abstützung zum Träger angeordnet, welche aus einer Schrägfläche besteht, die mit einer entsprechenden Schrägfläche am Träger zusammenwirkt. Diese Abstützung über Schrägflächen begünstigt bei einem Stoß auf die Stoßkante des Halteelements einen gewissen Spielraum in der Relativbewegung zum Träger bzw. zum Fahrschemel. Außerdem kann sich die Kante dieser Abstützung in den Fahrschemel eingraben.

Die Halteelemente weisen zur Energieaufnahme vorzugsweise mehrere Ausnehmungen auf, die dreieckförmig oder in anderer Weise ausgeführt sein können und sich unmittelbar aneinander reihen.

Ein Ausführungsbeispiel der Erfindung ist in den Zeichnungen dargestellt und wird im folgenden näher beschrieben.

Es zeigen:

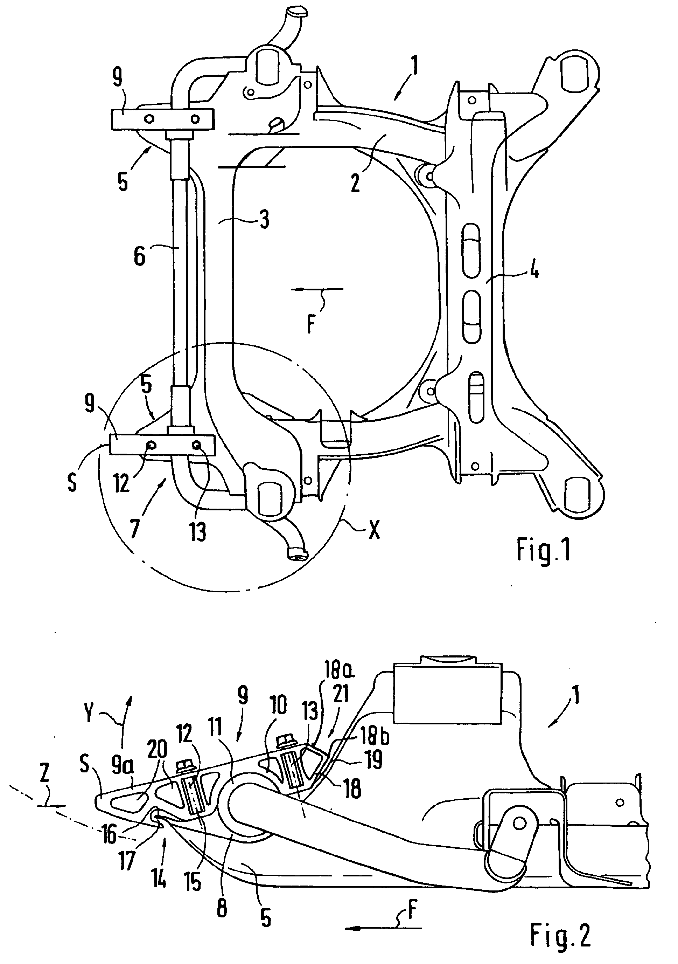

- Fig. 1: Eine Draufsicht auf einen Fahrschemel mit einem über Halteelemente befestigbaren Stabilisator und
- Fig. 2: eine Seitenansicht auf ein vergrößert dargestelltes Halteelemente gemäß Ausschnitt X der Fig. 1.

Ein Fahrschemel 1 umfasst im wesentlichen zu einem Gestell verbundene Längsträger 2 und Querträger 3 und 4. Am vorderen Träger 3 ist an einem Trägerfortsatz 5 ein Stabilisator 6 in Lagern 7 gehalten und befestigt.

Das Lager 7 umfasst in Trägerfortsätzen 5 jeweils eine halbkreisförmige Lagerung 8 und in einem als Schelle ausgebildeten Halteelement 9, die ergänzende weitere halbkreisförmige Lagerung 10. Der Querstab des Stabilisators 6 ist von einem Lagerelement 11 umgeben.

Das Halteelement 9 übergreift den Querstab des Stabilisators 6 von oben her und wird über Befestigungsschrauben 12, 13 mit dem Trägerfortsatz 5 verbunden.

Gleichzeitig bildet das Halteelement 9 mit seinem Stoßteil 9a eine sog. Crashstütze, welche bei einem Stoß in Pfeilrichtung Z auf den Fahrschemel 1 entgegen der Fahrtrichtung F, wirkt und diesen abfangen soll. Hierzu ist das Halteelement 9 mit einer sogenannten Einhakverbindung 14 versehen, die im wesentlichen aus einer schlitzartigen Ausnehmung 17 in der Auflagefläche 15 besteht, in welche eine Trägervorderkante 16 des Trägerfortsatzes 5 freiliegend hineinragt.

Zur Abstützung des Halteelementes 9 mit seinem hinteren freien Ende 21 weist dieses eine schräge Abstützfläche 18 auf, die einer entsprechenden Abstützflächen 19 am Träger 7 gegenübersteht. Die Kante der Abstützfläche kann sich bei einem Crash in den Fahrschemel eingraben

Das Halteelement 9 besteht vorzugsweise aus einem Strangpressprofil mit mehreren Durchbrechungen 20, die sich aneinander reihen. Die Durchbrechungen sind dreieckförmig ausgeführt, können aber auch eine andere geometrische Form aufweisen.

Bei einem Stoß auf das Halteelement 9 bzw. auf die Stützkante S des Stoßteils 9a in Pfeilrichtung Z verhakt sich dieses über seinen Schlitz 17 an der Vorderkante 16 des Trägerfortsatzes 5 und es kann eine begrenzte Energieaufnahme über das Halteelement 9 erfolgen. In Folge des Stoßes stützt sich das Halteelement 9 rückseitig an seinem freien Ende 21 über die Abstützfläche 18 am Träger 3 ab. Über die Einhakverbindung 14 wird auch sicher gestellt, dass das Halteelement 9 sich nicht in Pfeilrichtung Y hoch bewegen kann und somit die Schrauben 12, 13 herausgerissen werden.

## Patentansprüche

1. Fahrschemel (1) für eine Vorderachse eines Kraftfahrzeugs, der aus über Querträger (3, 4) verbundene Längsträger (2) besteht, welcher mittels Lagerungen (10) mit dem Fahrzeugaufbau verbindbar ist und an den Längsträgern Lageraufnahmen für Radführungsglieder vorgesehen sind und vorderseitig des Fahrschemels (1) - in Bezug auf die Fahrtrichtung des Kraftfahrzeugs - ein Stabilisator (6) am Querträger gelagert und über Halteelemente (9) befestigbar ist, wobei iedes Halteelement (9) einerseits den Stabilisator (6) als Schelle haltend übergreift und am Querträger (3) oder an einem Trägerfortsatz (5) über Befestigungsschrauben (Quer 12, 13) festsetzbar ist und **dadurch gekennzeichnet, dass** andererseits das Halteelement (9) ein über den Querträger (3 oder 5) des Fahrschemels (1) herausragendes Stoßteil (9a) umfasst, das mit dem Träger (3 oder 5) eine frontseitige Einhakverbindung (14) und am hinteren freien Ende (21) eine Abstützung zum Querträger (3) ausbildet.

2. Fahrschemel nach Anspruch 1, **dadurch gekennzeichnet, dass** das Halteelement (9) in seiner Auflagefläche (15) zum Träger (3 oder 5) als Einhakverbindung (14) eine schlitzartige Ausnehmung (17) aufweist, in welche eine Vorderkante (16) des Trägers (3 oder 5) hineinragt.

3. Fahrschemel nach den Ansprüchen 1 oder 2, **dadurch gekennzeichnet, dass** vor der Einhakverbindung (14) - in Fahrtrichtung F gesehen - das vor dem Träger (3 oder 5) liegende Stoßteil (9a) des Halteelements (9) mit einer Stützkante (S) versehen ist.

4. Fahrschemel nach den Ansprüchen 1, 2 oder 3, **dadurch gekennzeichnet, dass** am freien hinteren Ende (21) des Halteelements (9) die Abstützung zum Träger (3 oder 5) angeordnet ist, welche aus einer Schrägfläche (18) besteht, die einer entsprechenden Schrägfläche (19) am Träger (3) gegenübersteht.

5. Fahrschemel nach den Ansprüchen 1 oder 4, **dadurch gekennzeichnet, daß** die Schrägfläche (18) im Übergang zu einer weiteren Schrägfläche (18a) eine Kante (18b) bildet, welche unmittelbar dem Blech des Fahrschemels gegenübersteht.

6. Fahrschemel nach den Ansprüchen 1, 2, 3, 4 oder 5, **dadurch gekennzeichnet, dass** das Halteelement (9) aus einem Strangpressprofil mit mehreren Ausnehmungen (20) besteht, wobei die Befestigungsschrauben (12, 13) in eingeformten Hülsen zwischen diesen Ausnehmungen (20) aufgenommen sind.

7. Fahrschemel nach einem oder mehreren der vorhergehenden Ansprüche, **dadurch gekennzeichnet, dass** die Ausnehmungen (20) dreieckförmig ausgeführt sind und sich unmittelbar aneinander reihen.

## Claims

1. A sub-frame (1) for a front axle of a motor vehicle, said sub-frame comprising longitudinal members (2), which are connected by cross members (3, 4), and being connectable to the vehicle body by means of mountings (10), and bearing mounts for wheel control members are provided on the longitudinal members, and a stabiliser (6) is mounted on the cross member at the front end of the sub-frame (1) - in relation to the direction of travel of the motor vehicle - and is fixable by holding members (9), wherein, on the one hand, each holding member (9) engages over and holds the stabiliser (6) in the manner of a clamp and is securable to the cross-member (3) or to an extension (5) thereof by fastening screws (12, 13) and **characterised in that**, on the other hand, the holding member (9) comprises an impact part (9a) which projects beyond the cross member (3 or 5) of the sub-frame (1) and which, together with the member (3 or 5), forms a hooked connection (14) at the front end and, at the free rear end (21), forms a support for the cross member (3).

2. A sub-frame according to claim 1, **characterised in that**, to form the hooked connection (14), the holding member (9) has a slot-type recess (17) in its supporting surface (15) on the member (3 or 5), and a front edge (16) of the member (3 or 5) projects into the recess (17).

3. A sub-frame according to claim 1 or claim 2, **characterised in that**, upstream of the hooked connection (14), seen in the direction of travel F, the impact part (9a) of the holding member (9) is provided with a supporting edge (S), said impact part lying in front of the member (3 or 5).

4. A sub-frame according to claims 1, 2 or 3, **characterised in that** the support for the member (3 or 5) is arranged at the free rear end (21) of the holding member (9) and comprises an oblique surface (18) lying opposite a corresponding oblique surface (19) on the member (3).

5. A sub-frame according claim 1 or claim 4, **characterised in that** the oblique surface (18) forms, in transition to a further oblique surface (18a), an edge (18b) lying directly opposite the metal of the sub-frame.

6. A sub-frame according to claims 1, 2, 3, 4 or 5, **characterised in that** the holding member (9) comprises an extruded section with a plurality of recesses (20), wherein the fastening screws (12, 13) are held in moulded sleeves formed between these recesses (20).

7. A sub-frame according to one or more of the preceding claims, **characterised in that** the recesses (20) are triangular in shape and are arranged in direct succession.

## Revendications

1. Faux châssis (1) pour un essieu avant d'un véhicule automobile, qui est formé par des longerons (2) reliés par l'intermédiaire de traverses (3, 4), lequel peut être assemblé avec la structure du véhicule au moyen de systèmes de palier (10) et des logements de palier pour des organes de guidage des roues sont prévus sur les longerons, et un stabilisateur (6) est monté sur la traverse dans la partie avant du faux châssis (1) - par rapport au sens de déplacement du véhicule automobile - et peut être fixé par l'intermédiaire d'éléments de fixation (9), chaque élément de fixation (9) s'engageant, d'une part, au-dessus du stabilisateur (6) en le maintenant à la manière d'un collier et pouvant être fixé sur la traverse (3) ou sur une queue de traverse (5) au moyen de vis de fixation (12, 13) et **caractérisé en ce que**, d'autre part, l'élément de fixation (9) comporte une partie d'about (9a) qui forme saillie sur la traverse (3 ou 5) du faux châssis (1) et qui forme un système d'accrochage (14) frontal avec la traverse (3 ou 5) et sur l'extrémité arrière libre (21) une zone d'appui sur la traverse (3).

2. Faux châssis selon la revendication 1, **caractérisé en ce que** l'élément de fixation (9), dans sa surface d'appui (15) sur la traverse (3 ou 5), comporte un évidement (17) en forme de fente formant un système d'accrochage (14) dans lequel s'engage un bord avant (16) de la traverse (3 ou 5).

3. Faux châssis selon la revendication 1 ou 2, **caractérisé en ce que**, devant le système d'accrochage (14) - par référence au sens de déplacement (F) -, la partie d'about (9a) de l'élément de fixation (9), laquelle est disposée devant la traverse (3 ou 5), est munie d'un bord d'appui (S).

4. Faux châssis selon la revendication 1, 2 ou 3, **caractérisé en ce que** sur l'extrémité arrière libre (21) de l'élément de fixation (9) est agencée la zone d'appui sur la traverse (3 ou 5), laquelle est formée par une face inclinée (18) qui est agencée en regard d'une face inclinée (19) correspondante sur la traverse (3).

5. Faux châssis selon la revendication 1 ou 4, **caractérisé en ce que** la face inclinée (18), dans la zone de transition vers une autre face inclinée (18a), forme une arête (18b) qui est située directement en regard de la tôle du faux châssis.

6. Faux châssis selon la revendication 1, 2, 3, 4 ou 5, **caractérisé en ce que** l'élément de fixation (9) est formé par un profilé extrudé comportant plusieurs évidements (20), les vis de fixation (12, 13) étant reçues dans des manchons formés entre lesdits évidements (20).

7. Faux châssis selon une ou plusieurs des revendications précédentes, **caractérisé en ce que** les évidements (20) ont une forme triangulaire et sont alignés directement les uns avec les autres.
